# EUROPEAN PATENT SPECIFICATION

(11) **EP 3 653 284 B1**
(45) Date of publication and mention of the grant of the patent: **29.12.2021**
(21) Application number: 19208996.9
(22) Date of filing: 13.11.2019
(51) Int. Cl.: B01D 61/14, C02F 1/44, B01D 61/18, C04B 33/28, C04B 33/132, B28B 1/26, B28B 11/04, B01D 63/06, B01D 69/04

(54) **METHOD AND PLANT FOR THE PRODUCTION OF CERAMIC PRODUCTS PROVIDED WITH A UNIT FOR THE TANGENTIAL FILTRATION OF WASTEWATER**
VERFAHREN UND ANLAGE ZUR HERSTELLUNG VON KERAMIKPRODUKTEN MIT EINER EINHEIT FÜR DIE TANGENTIELLE FILTRATION VON ABWASSER
PROCÉDÉ ET INSTALLATION DE PRODUCTION DE PRODUITS CÉRAMIQUES ÉQUIPÉS D'UNE UNITÉ DE FILTRATION TANGENTIELLE DES DÉCHETS

(30) Priority: 13.11.2018 IT 201800010284
(43) Date of publication of application: 20.05.2020
(73) Proprietor: SACMI COOPERATIVA MECCANICI IMOLA SOCIETA' COOPERATIVA, 40026 Imola (BO) (IT)
(72) Inventor: MAZZANTI, Vasco, 40026 IMOLA (BO) (IT)
(74) Representative: Musconi, Roberta

(56) References cited:
- EP-A1- 1 897 602
- CN-A- 102 512 956
- CN-U- 207 511 859
- US-A1- 2015 122 740

## Description

### CROSS-REFERENCE TO RELATED APPLICATIONS

This patent application claims priority from Italian patent application no. 102018000010284 filed on 13/11/2018.

### TECHNICAL FIELD

The present invention relates to a method and to a plant for the production of ceramic articles provided with a wastewater tangential filtration unit.

### BACKGROUND OF THE INVENTION

As is known, the method for the production of ceramic articles, such as sanitaryware articles, involves a forming step for casting of the slip (a compound containing water and feldspar clays, sands and grog) produced inside high-pressure casting cells to obtain semi-finished or raw ceramic articles. The forming step involves the use of moulds made of porous materials to allow expulsion of the water contained in the slip.

Subsequently, at the end of the forming step, the moulds used inside the casting cells undergo a cleaning and washing step using mains water or treated water with similar properties, devoid of suspended solids; the cleaning and washing step of the moulds produces a wastewater flow mainly comprising water with suspended solids of sizes generally smaller than 63 µm, corresponding to the size of the slip sieve.

To be able to be discharged into the sewers or partially reused for less noble uses (such as washing floors), the wastewater flow undergoes a purification step in which coagulant and polyelectrolyte are added to allow agglomeration of the suspended solids, increase their sizes and allow them to settle. The method described above is called clariflocculation. As well as requiring the use of additives (which are expensive), clariflocculation technology does not allow the water to be reused in the washing process of the moulds (as it is rich in suspended solids and contaminated by chemical products used in the clariflocculation process) and does not allow recovery of the raw materials dispersed in the wastewater (as foreign substances such as coagulant and polyelectrolyte have been added).

Moreover, the method for the production of ceramic articles also comprises an enamelling step of the semi-finished or raw ceramic articles produced inside the enamelling booths. The enamelling booths and their content are washed at the end of each enamelling step and the washing step produces a wastewater flow (mainly comprising water with clays, feldspars, carbonates, metal oxides and also pigments) that is not reused and is disposed of with a process similar to the one described above, thereby leading to the same type of drawbacks.

Similar problems of separating the solids from the liquid parts of the wastewater and their reuse in the line are also present in production lines for crockery and also ceramic tiles or slabs; consequently, the solutions described herein can also be applied to these contexts.

CN207511859U discloses a plant for the production of ceramics with wastewater treatment units, in which the wastewater is filtered and the solid and water parts are reused in the ceramics producing processes.

Therefore, the object of the present invention is to provide a method and a plant for the production of ceramic articles provided with a wastewater tangential filtration unit devoid of the drawbacks of the state of the art and at the same time easy and inexpensive to implement.

### SUMMARY

According to the present invention, a method and a plant are provided for the production of ceramic articles provided with a wastewater tangential filtration unit according to the appended claims.

### BRIEF DESCRIPTION OF THE FIGURES

The invention is described hereinafter with reference to the accompanying drawings, which illustrate some non-limiting examples of embodiment thereof, wherein:
- Fig. 1 is a schematic view of a first variant of the wastewater filtration unit in a plant for the production of ceramic articles produced in accordance with the present invention;
- Fig. 2 is a perspective view of a filtration element of the unit of Fig. 1;
- Fig. 3 illustrates some variants of a membrane of the filtration element of Fig. 2;
- Figs. 4 and 5 schematically illustrate the tangential filtration performed by the membranes of Fig. 3; and
- Fig. 6 is a schematic view of a plant for the production of ceramic articles provided with a wastewater filtration unit;
- Fig. 7 is a schematic view of a second variant of the wastewater filtration unit produced in accordance with the present invention.

### DETAILED DESCRIPTION

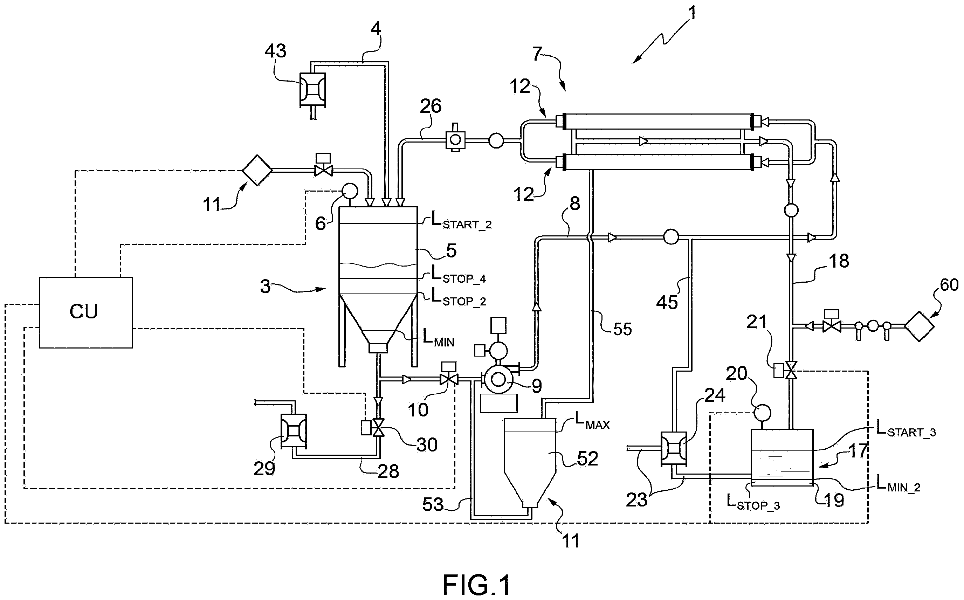

In Fig. 1, the number 1 indicates as a whole a wastewater filtration unit in a plant 2 for the production of ceramic articles, such as ceramic tiles or slabs or sanitaryware articles (such as basins, shower trays, bidets, etc.).

The wastewater filtration unit 1 comprises a wastewater collecting device 3 of the wastewater to be treated that is fed through a supply duct 4 of the wastewater to be treated.

The wastewater collecting device 3 is produced by means of a tank 5 inside which a level sensor 6 is advantageously housed, advantageously of ultrasonic type and configured to detect the level of wastewater contained inside said tank 5; the level sensor 6 is connected to a control unit CU to which the signals, relating to the level of wastewater contained inside the tank 5, are transmitted.

The wastewater to be treated flowing out from the tank 5 is fed to a filtration device 7 (of the unit 1).

The filtration device 7 is connected to the tank 5 through a delivery manifold 8 of the wastewater to be treated.

According to some non-limiting embodiments, pumping means 9, advantageously centrifugal, are housed along the delivery manifold 8 which draw water from the tank 5 to feed the wastewater to be treated to the filtration unit 7.

Moreover, according to some non-limiting embodiments, the wastewater flow to be treated that is fed into the delivery manifold 8 (and hence to the filtration device 7) is regulated by means of a specific regulating valve 10; the regulating valve 10 is connected to the control unit CU and is controlled by the control unit CU as a function of the quantity of wastewater to be treated which is disposed of by the filtration device 7. The regulating valve 10 is arranged along the delivery manifold 8, advantageously upstream of the pumping means 9.

In particular, the device 1 also comprises a washing circuit 11, advantageously using water; the washing circuit 11 is driven (activated) by the control unit CU at the end of each work cycle (as better described in the description below).

The washing circuit 11 comprises a tank 52 that is preferably supplied with mains water and detergents and is connected, through the pipe 53, to the delivery manifold 8, preferably upstream of the pumping means 9 and downstream of the regulating valve 10.

The filtration device 7 comprises at least one tangential filtration element 12.

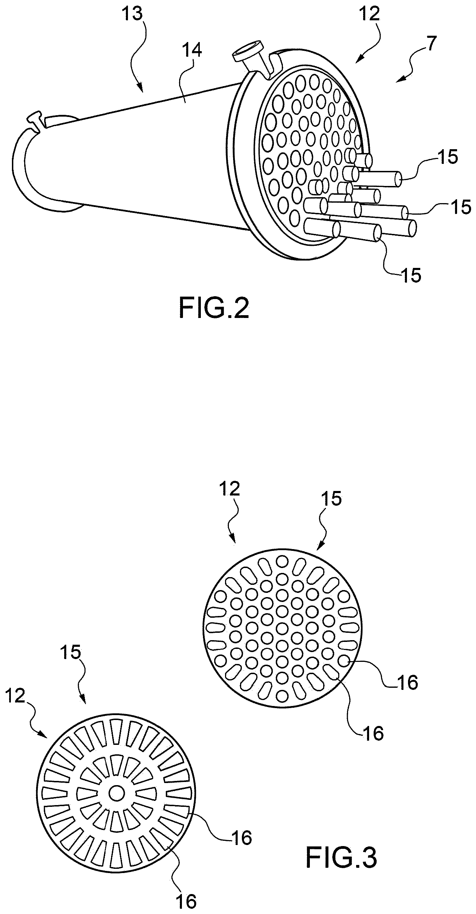

Advantageously, according to the illustration in Fig. 2, the filtration device 7 comprises a plurality of tangential filtration elements 12 (for example, two tangential filtration elements 12) arranged in parallel.

According to the illustration in Figs. 2 to 5, the tangential filtration element 12 is produced by means of a support shell 13, advantageously made of metal or plastic material and provided with a side wall 14 having a cylindrical symmetry. According to some non-limiting embodiments, the element 12 comprises at least one filtering membrane 15 (more precisely, a plurality of membranes 15), in particular housed inside the shell 13. More precisely, according to a first variant, each membrane 15 consists of a monolithic element, inside which a number of (longitudinal) filtration channels 16 are defined for the wastewater flow to be treated.

Alternatively, according to a further variant, each membrane 15 consists of a plurality of (longitudinal) filtration pipes 16 for the wastewater flow embedded in the support shell 13. Each of the filtration channels 16 has an average diameter comprised between 2 and 16 mm, advantageously comprised between 4 and 8 mm.

Advantageously, the filtration channels 16 extend for the whole length of the monolithic element.

According to a first variant, the filtration channels 16 have uniform sizes in section. According to a second variant, the filtration channels 16 have different sizes in section, in particular the peripheral filtration channels 16 have larger sizes than the central filtration channels 16.

Advantageously, the filtration channels 16 are evenly distributed in the monolithic element.

The separation between separated product (permeate) and concentrated product takes place through the (each) membrane 15; the separation is generated by a thrust force that is represented by the hydraulic pressure supplied by the pumping means 9.

According to a first variant, the (each) membrane 15 comprises (is) a ceramic membrane.

According to a second variant, the (each) membrane 15 comprises (is) a polymer membrane.

The (each) membrane 15 performs a microfiltration and holds back particles with an approximate size of at least 0.3 µm, advantageously of at least 0.1 µm. In other words, the pores of the membrane 15 have an approximate pore size equal to or less than 0.3 µm, advantageously equal to or less than 0.2 µm, more advantageously equal to or less than 0.1 µm (ultrafiltration), more advantageously equal to or less than 0.01 µm, even more advantageously comprised between 20 and 100 kDa (nanofiltration).

The membrane/s 15 is/are commercially available.

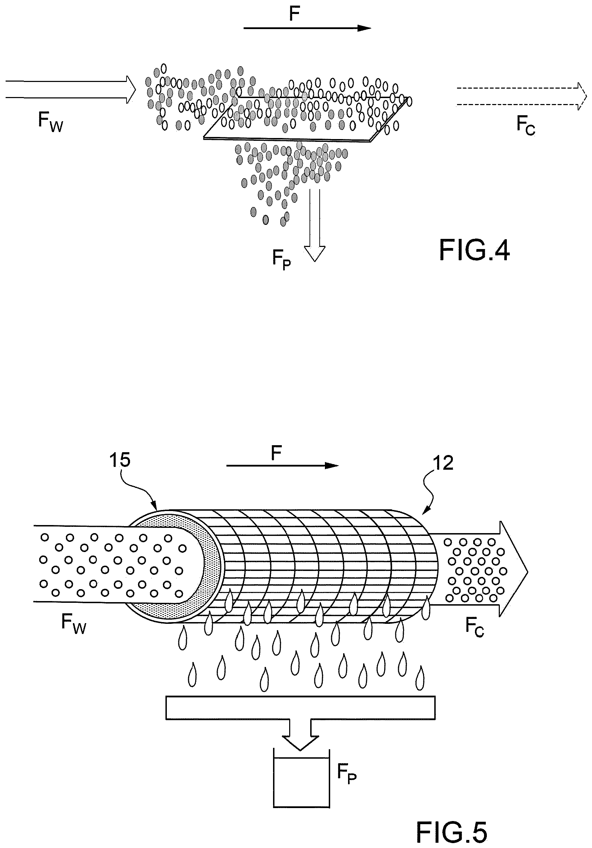

As better illustrated in Fig. 4, the wastewater flow to be treated (filtered) flows inside the tangential filtration element 12 along a tangential filtration direction F. In other words, the wastewater flow to be treated runs tangentially relative to the surface of each filtration channel 16.

In this way, each tangential filtration element 12 is capable of separating the separated product (permeate) of the wastewater flow (in particular, the separated product contains particles of sizes smaller than the pore size of the membrane 15) and the concentrated product of the wastewater flow (the concentrated product contains suspended solids having sizes larger than the pore size of the membrane 15).

It has been found that the tangential filtration elements 12 make it possible to obtain a separated product devoid of viruses and bacteria and, at the same time, devoid of suspended solids (100% abatement efficiency) relative to the prior art system, which requires the use of chemical products, is not capable of eliminating the bioburden (viruses and bacteria) of the separated product and achieves an abatement efficiency of suspended solids of 90%.

The wastewater filtration unit 1 further comprises a collecting device 17 for collecting the separated product (permeate) that is fed through a delivery duct 18 that branches off from the filtration device 7. The collecting device 17 comprises a tank 19 inside which a level sensor 20is advantageously housed, advantageously of ultrasonic type and configured to detect the level of the separated product (permeate) contained in said tank 19; the level sensor 20 is connected to the control unit CU to which it transmits the signals relating to the level of the separated product (permeate) contained in said tank 19.

According to some non-limiting embodiments, the flow of the separated product (permeate) fed to the collecting device 17 is regulated by means of a specific regulating valve 21 arranged along the delivery duct 18 and driven by the control unit CU.

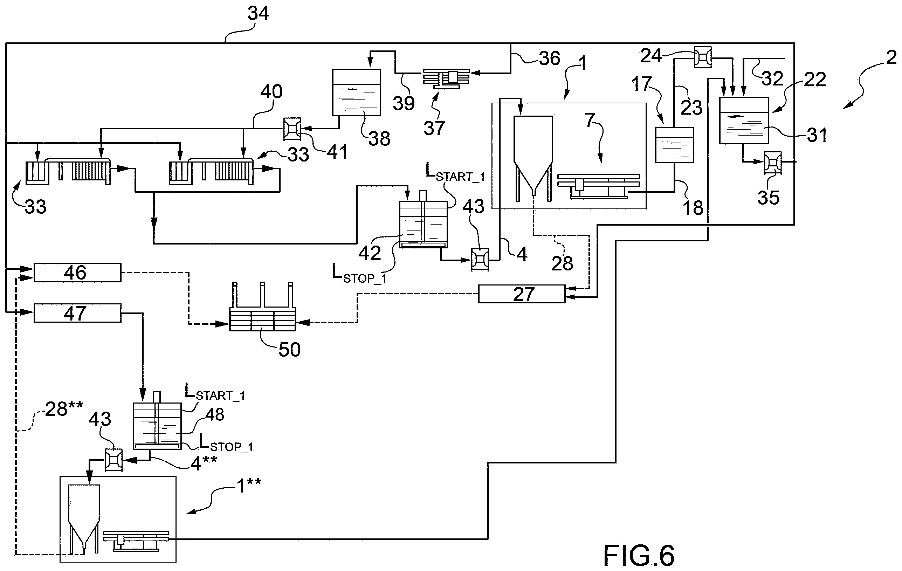

The separated product (permeate) flowing out from the tank 19 is subsequently fed to a recovery unit 22 of the separated product (illustrated in Fig. 6) to which it is connected through a feed duct 23.

Advantageously, a pump 24, advantageously a membrane pump, is arranged along the feed duct 23 to convey the separated product (permeate).

The product that does not permeate (concentrate) flowing out from the filtration device 7 returns to the tank 5 through a feed duct 26 that branches off from the filtration device 7. The concentrated product is thus recirculated continuously for each work cycle inside the wastewater filtration unit 1.

The wastewater filtration unit 1 is arranged for a discontinuous or intermittent operation (in batches).

For each work cycle, the tank 5 is loaded to a work start level; the wastewater flow to be treated will be processed until reaching the stop level that is set (controlled) as a function of the volume of concentrated product suitable for subsequent reuse during preparation of the mixture (slip) for the production of ceramic articles.

The duration of each work cycle is thus regulated by the control unit CU. At the end of each work cycle, the concentrated product contained in the tank 5 is fed to a recovery unit 27 of the concentrated product (illustrated in Fig. 6) to which it is connected through a feed duct 28, as better described in the description below. Advantageously, a pump 29, advantageously a membrane pump, is arranged along the feed duct 28 to convey the concentrated product. According to some non-limiting embodiments, the flow of the concentrated product flowing out from the tank 5 is regulated by means of a specific regulating valve 30 connected to the control unit CU.

According to the illustration of Fig. 6, the wastewater filtration unit 1 described above can advantageously be applied in the plant 2 for the production of ceramic articles for the filtration of the wastewater flowing out from the high-pressure casting machines and/or for the filtration of the wastewater flowing out from the enamelling cells.

In particular, the unit 1 is designed to filter wastewater coming from one or more casting machines 33 (which acts as processing unit and is designed to obtain semi-finished or raw ceramic articles). More in particular, the unit 1 is designed to filter the wastewater deriving from the washing of one or more casting machines 33.

According to some non-limiting embodiments, the (each) casting machine 33 comprises at least one casting mould.

In particular, the plant 2 for the production of ceramic articles comprises the wastewater filtration unit 1 that feeds the separated product (permeate) to the recovery unit 22 of the separated product (permeate) through a respective feed duct 23.

The recovery unit 22 of the separated product comprises a tank 31 inside which a level sensor (not illustrated) is advantageously housed configured to detect the level of the separated product (permeate) contained in said tank 31 and connected to the control unit CU. Advantageously, the recovery unit 22 of the separated product is provided with a circuit 32 for replenishing the mains water, which is mixed with the separated product (permeate).

The separated product (permeate) obtained delivered from the wastewater filtration unit 1 is substantially water (devoid of suspended solids, viruses and bacteria).

Advantageously, the water flowing out from the tank 31 can be reused inside the plant 2 for the production of ceramic articles.

In particular, according to a first variant, the water flowing out from the tank 31 is fed to at least one high-pressure casting machine 33 (in particular, to a plurality of casting machines 33) for washing at least one mould (known and not illustrated) used for the production of ceramic articles; each of said casting machines 33 is connected to the tank 31 through a delivery duct 34. According to some non-limiting embodiments, along the delivery duct 34 pumping means 35 are provided that draw from the tank 31 to feed the water to the casting machines 33. The water is advantageously used for washing (in particular, internally) the moulds used for the production of ceramic articles.

In particular, the machine 33 (more in particular, each machine 33) comprises at least one related mould.

According to some non-limiting embodiments, along the delivery duct 34 a bypass duct 36 is provided that feeds a fraction of the water to a treatment unit 37 (softening and/or osmosis) of the water; the flow of water fed to the treatment unit 37 is advantageously controlled by means of a regulating valve (not illustrated).

The purified water is fed to a tank 38 connected to the treatment unit 37 through a duct 39. The purified water flowing out from the tank 38 is also fed to the casting machines 33 to which it is connected through a feed duct 40. Advantageously, a pump 41, advantageously a membrane pump, is arranged along the feed duct 40 to convey the purified water. The purified water is advantageously used for washing (in particular, internally) the moulds used for the production of the ceramic articles.

The wastewater produced by the high-pressure casting machines 33 is collected inside a number of storage tanks 42 that feed the wastewater to the wastewater filtration unit 1 described above through the respective supply duct 4. Advantageously, a charging pump 43, advantageously a membrane pump, is arranged along the supply duct 4 to convey the wastewater towards the filtration unit 1.

The concentrated product obtained delivered from the wastewater filtration unit 1 is substantially a slip (diluted - i.e., enriched with water in relation to the recipe of the slip, a compound containing water and clay, used to prepare the mixture) .

The concentrated product (diluted slip) is fed to the recovery unit 27 of the concentrated product through a respective feed duct 28 and reused in the preparation of the slip to be used in the actual production process of the ceramic articles. In other words, in particular, the recovery unit 27 is designed to prepare a ceramic mixture (slip - component in the production of ceramic articles). More in particular, the recovery unit 27 is also designed to feed the ceramic mixture (slip) to the casting machine 33.

The recovery unit 27 of the concentrated product acts as processing machine.

As better illustrated in Figs. 4 and 5, for a flow Fw of wastewater of approximately 100 m³ it is possible to obtain 90 m³ of flow Fp of separated product (water) and 10 m³ of flow F_{c} of concentrated product (diluted slip).

Additionally or alternatively to the unit 1, the plant 2 for the production of ceramic articles comprises a further unit 1** for the filtration of the wastewater that feeds the separated product (permeate) to the recovery unit 22 of the separated product (permeate) through a respective feed duct 23**. Clearly, also in this case the separated product (permeate) obtained delivered from the filtration unit 1** of the wastewater is substantially water (devoid of suspended solids, viruses and bacteria). In particular, the unit 1** is designed to filter the wastewater coming from one or more enamelling apparatuses, such as enamelling booths and their content (more in particular, wastewater deriving from the washing of one or more enamelling apparatuses).

According to some non-limiting embodiments, the separated product (permeate) delivered from the unit 1** (in particular, flowing out from the tank 31) is fed to a unit 46 for the preparation of enamels (components in the production of ceramic articles) and to a washing unit 47 of the enamelling apparatuses through the delivery duct 34. The units 46 and 47 act as work units.

The wastewater produced by the washing unit 47 of the enamelling apparatuses is collected inside a number of storage tanks 48 that feed the wastewater to the wastewater filtration unit 1** described above through the respective supply duct 4**.

Advantageously, a charging pump 43, advantageously a membrane pump, is housed along the supply duct 4** to convey the wastewater towards the filtration unit 1**.

The concentrated product obtained delivered from the filtration unit 1** of the wastewater comprises (is substantially) pigments. In this case, the concentrated product (pigments delivered from the unit 1**) is fed (through the feed duct 28**) to the unit 46.

The slip and the enamels are used in an actual production unit 50 of the ceramic articles that comprises at least one kiln and/or a dryer.

In particular, the enamels coming from the unit 46 are fed to the enamelling apparatuses. Additionally or alternatively, the slip produced by the unit 27 is fed to the casting machine 33. The unit 27 comprises a tank (not illustrated) provided with a level sensor.

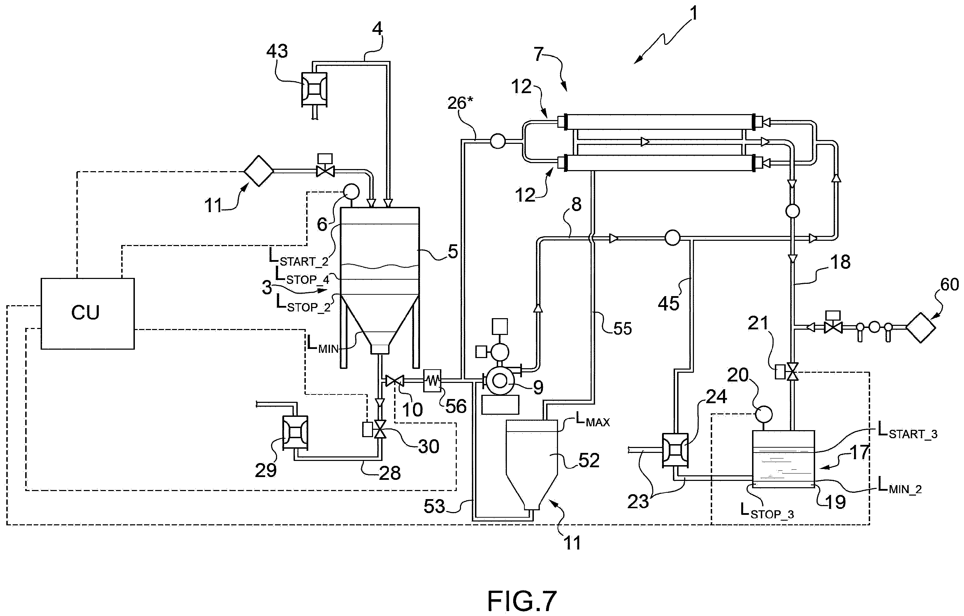

According to an alternative embodiment illustrated in Fig. 7, the wastewater flow to be treated flowing out from the tank 5 is fed to the filtration device 7 by means of a charging pump 56. In particular, the charging pump 56 feeds the circuit produced by the delivery manifold 8, by the pumping means 9 and by the feed duct 26.

The control unit is arranged to regulate the feed of the wastewater flow to be treated; advantageously, the feed of the wastewater flow to be treated entering said circuit is equal to the amount of separated product collected in the tank 19. Flow rate measuring devices are provided, connected to the control unit CU and arranged along the duct that connects the tank 5 to the charging pump 56 and along the duct that connects the filtration device 7 to the tank 19.

The control unit CU is configured to acquire flow rate signals coming from said flow rate measuring devices and to regulate the charging pump 56 so as to maintain a constant volume of wastewater to be treated in the circuit produced by the delivery manifold 8, by the pumping means 9 and by the feed duct 26.

According to a preferred variant, the concentrated product flowing out from the filtration device 7 is fed directly through suction to the pumping means 9 through a feed duct 26* that branches off from the filtration device 7 and flows out into the delivery manifold 8 upstream of the pumping means 9 (and, preferably, downstream of the charging pump 56).

The method for the production of ceramic articles thus comprises a first processing step in which a wastewater flow to be treated is produced; a tangential filtration step of the wastewater flow so as to perform a separation between the permeate and the concentrated product; a recovery step to recover the permeate and the concentrated product obtained from the tangential filtration step; and a production step to produce an ingredient required in the production of the ceramic articles produced with the recovered concentrated product; and a second processing step and/or a washing step performed with the recovered permeate.

According to a first variant, the first processing step in which the wastewater flow to be treated is produced comprises a pressing step of the slip performed inside the high-pressure casting machines 33 (casting cells) to obtain semi-finished or raw ceramic articles and the subsequent step of cleaning and washing the moulds used inside these casting machines 33.

According to a second variant, the first processing step in which a wastewater flow to be treated is produced comprises step of enamelling the ceramic articles and of washing the enamelling apparatus.

When the level inside the tank 5 reaches a minimum settable value L_{MIN}, a step of loading the wastewater flow to be treated is started by operating the charging pump 43. Before driving the charging pump 43, the control unit CU checks that the level of wastewater to be treated inside the storage tanks 42 and 48 is above a settable stop value L_{STOP_1}. The loading step is interrupted when the level of the wastewater to be treated inside the tank 5 reaches a settable start value L_{START_2}. Alternatively, the loading step is interrupted if the level of wastewater to be treated in the storage tanks 42 and 48 reaches a settable stop value L_{STOP}_₁; the loading step can recommence in the moment in which a level of wastewater to be treated in the storage tanks 42 and 48 equal to the settable start value L_{START}_₁ is detected.

The work step, (subsequent to the loading step) in which the actual filtration (described in detail above) is performed, starts when the level of the wastewater to be treated in the tank 5 reaches the settable start value L_{START_2} and ends when the level of the wastewater to be treated in the tank 5 reaches the settable stop value L_{MIN}.

During the work step, backwash operations are performed in a programmable number and with a programmable frequency and duration. In particular, the control unit CU checks whether the level of separated product inside the tank 19 is greater than a minimum settable value L_{MIN}_₂ and operates the pump 24, which is connected by means of a duct 45 to the filtration device 7 to perform backwashes of the filtration device 7 with the separated product. During backwashing, the separated product permeates the membranes 15, removing any suspended solids that have deposited along the inner surface of the membranes 15.

Alternatively, backwashing operations are performed by means of a compressed air backwash circuit 60.

During the work step, the separated product is transferred constantly into the tank 31 through the feed duct 23; in particular, transfer starts when the level of separated product in the tank 19 reaches a settable transfer start value L_{START}_₃ and stops when the level of separated product in the tank 19 reaches a transfer stop value L_{STOP}_₃.

Alternatively, transfer of the separated product from the tank 19 to the tank 31 is interrupted in the moment in which the level inside the tank 5 is equal to a settable transfer stop value L_{STOP_4} so that the tank 19 in any case contains sufficient separated product to perform backwash operations.

At the end of the work step, the control unit CU is configured to open the regulating valve 30 and drive the pump 29 so as to transfer the concentrated product from the tank 5 to the recovery unit 27 of the concentrated product. The unloading step of the concentrated product starts when the level of concentrated product inside the tank 5 reaches the settable stop value L_{STOP_2} and stops when the level of concentrated product in the tank 5 reaches the settable minimum value L_{MIN}.

Alternatively, the unloading step of the concentrated product stops in the moment in which a level of concentrated product in the tank of the unit 27 greater than a safety value is detected.

Finally, a washing step is provided subsequent to the unloading step of the concentrated product. The control unit is arranged to check whether the level of water in the tank 52 is equal to a maximum value L_{MAX}.

Only in the case in which this condition is verified, the regulating valve 10 is closed and the water is fed into the filtration device 7 through the pumping means 9 to clean the membranes 15. The water that permeates the membranes 15 during the washing step is then conveyed into the tank 52 through the duct 55, just as the water that flows through the filtration device 7 and does not permeate the membranes 15 is conveyed into the tank 52 once again through a further duct (not illustrated) that branches off from the duct 18 and flows into the tank 52, after having closed the regulating valve 21.

Preferably, also during the washing step, backwash operations are performed in a programmable number and with a programmable frequency and duration.

As already mentioned, the plant 2 described above can be advantageously used in the production of sanitaryware articles. According to some embodiments of this variant, the plant 2 is advantageously provided with both of the filtration units 1, 1**. According to further embodiments, the plant 2 comprises a single filtration unit (the filtration unit 1 and not the filtration unit 1**).

Alternatively, the plant 2 described above can be advantageously used in the production of ceramic tiles or slabs. According to this variant, the plant 2 is provided with the filtration unit 1**, but is devoid of the filtration unit 1 (and also the casting machine 33, which is, for example, replaced by a machine for the production of ceramic tiles or slabs).

## Claims

1. A plant (2) for the production of ceramic articles comprising:
at least one first processing unit (33; 47), which is configured to produce, during the normal operation, a wastewater flow to be treated;
at least one filtration unit (1; 1**) supplied with the wastewater flow produced by the first processing unit (33; 47);
at least one second processing unit (27; 46), which is configured to produce, during the normal operation, at least one component in the production of the ceramic articles;
at least one conveying assembly (28; 28**) to feed a concentrated product obtained from the filtration unit (1; 1**) to the second processing unit (27; 46);
at least one recovery unit (22) to recover the permeate obtained from the filtration unit (1); and
a control unit (CU);
the plant is **characterised in that** the filtration unit (1; 1**) comprises:
at least one tangential filtration element (12) of the wastewater flow designed to perform a work step, which is a separation between a permeate and a concentrated product; the wastewater flow runs along a tangential filtration direction (F) inside the filtration element (12);
a wastewater collecting device (3) that feeds, by means of a delivery manifold (8), the wastewater flow to be treated to the tangential filtration element (12);
a feeding duct (26) extending from the filtration element (12) to the wastewater collecting device (3) such that the concentrated product is recirculated inside the filtration unit (1; 1**), in particular in a continuous manner during each work cycle; and
a collecting device (17) for the permeate, which is fed through a delivery duct (18) extending from the tangential filtration element (12);
and wherein the filtration unit (1; 1**) is arranged for a discontinuous or intermittent operation, in which each work cycle is interrupted only in the moment in which the control unit (CU) detects a quantity of permeate, which is equal to a reference quantity (L_{STOP}_₃) inside the collecting device (17) for the permeate.

2. A plant according to claim 1, wherein the first processing unit (47, 33) comprises a washing unit (47) for enamelling apparatuses or a casting machine (33); and wherein the second processing unit (46, 27) comprises a unit (46) for the preparation of the enamels to be used in the production of the ceramic articles or a unit (27) for the preparation of the slip to be used in the production of the ceramic articles.

3. A plant according to claim 1 or 2 and comprising first pumping means (9) housed along the delivery manifold (8).

4. A plant according to any one of the preceding claims, wherein the filtration unit (1; 1**) comprises a plurality of tangential filtration elements (12) arranged in parallel.

5. A plant according to any one of the preceding claims, wherein at the end of each work step, the control unit (CU) is arranged to transfer the concentrated product collected inside said device (3) to the second processing unit (27; 46) until reaching a predetermined quantity (Lₘᵢₙ) of concentrated product inside said device (3).

6. A plant according to any one of the claims from 3 to 5, and comprising a concentrated product feeding duct (28) extending from the wastewater collecting device (3) to the second processing unit (27; 46); second pumping means (29) are preferably arranged along the feeding duct (28) to convey the concentrated product.

7. A plant according to any one of the preceding claims, wherein the tangential filtration element (12) comprises a support shell (13) configured to house, on the inside, at least one filtering membrane (15), preferably ceramic and/or polymer.

8. A plant according to claim 7, wherein the filtering membrane (15) consists of a monolithic element having, on the inside, a plurality of filtration channels (16) for the wastewater flow to be treated and where the wastewater flow to be treated is designed to flow tangentially relative to the surface of each filtration channel (16); the filtering membrane (15) is designed to hold back particles with an approximate size of at least 0.3 µm, advantageously at least 0.2 µm.

9. A plant according to any one of the preceding claims, wherein the filtration unit (1; 1**) comprises a washing circuit (11) for the filtration device (7) comprising a first tank (52), preferably supplied with mains water, and connected to the delivery manifold (8).

10. A plant according to any one of the preceding claims, wherein during each work step, the control unit (CU) is arranged to perform, with a programmable frequency and duration, backwash operations by means of third pumping means (24) that draw from a tank (19) of the collecting device (17) for the permeate to perform backwashing of the filtration element (12) with the permeate.

11. A plant according to any of the claims from 1 to 9, wherein during each work step the control unit (CU) is arranged to perform, with a programmable frequency and duration, backwash operations of the filtration element (12) by means of a compressed air backwash circuit (60).

12. A method for the production of ceramic articles comprising:
a first processing step, during which a wastewater flow to be treated is produced;
a work step in which a wastewater flow tangential filtration is performed, so as to separate a permeate and a concentrated product;
a recovery step to recover the permeate and the concentrated product obtained from the work step; and
a production step to produce a component in the manufacturing of the ceramic articles, during which the recovered concentrated product is used;
the method is **characterised in that** the work step takes place in a discontinuous manner and is interrupted when a quantity of permeate produced, equal to a reference quantity (L_{STOP}_₃), is detected and in which the concentrated product is recirculated continuously during said work step.

13. A method according to claim 12 and comprising a second processing step and/or a washing step carried out with the recovered permeate, during which the recovered permeate is used.

14. A method according to claim 12 or 13, wherein the first processing step comprises a casting step of the ceramic articles and a washing step of casting cells used during the casting step.

15. A method according to claim 12 or 13, wherein the first processing step comprises an enamelling step to enamel the ceramic articles and a washing step to wash the enamelling apparatuses used during the enamelling step.

## Patentansprüche

1. Anlage (2) zur Herstellung von Keramikartikeln mit:
mindestens einer ersten Verarbeitungseinheit (33; 47), die konfiguriert ist, während des Normalbetriebs einen zu behandelnden Abwasserstrom zu erzeugen;
mindestens einer Filtrationseinheit (1; 1**), die mit dem durch die erste Verarbeitungseinheit (33; 47) erzeugten Abwasserstrom beliefert wird;
mindestens einer zweiten Verarbeitungseinheit (27; 46), die konfiguriert ist, während des Normalbetriebs mindestens eine Komponente in der Herstellung der Keramikartikel zu erzeugen;
mindestens einer Förderanordnung (28; 28**), um ein aus der Filtrationseinheit (1; 1**) erhaltenes konzentriertes Produkt in die zweite Verarbeitungseinheit (27; 46) einzuspeisen;
mindestens einer Rückgewinnungseinheit (22), um das aus der Filtrationseinheit (1) erhaltene Permeat zurückzugewinnen; und
einer Steuereinheit (CU);
wobei die Anlage **dadurch gekennzeichnet ist, dass** die Filtrationseinheit (1; 1**) aufweist:
mindestens ein Tangentialfiltrationselement (12) des Abwasserstroms, das dazu bestimmt ist, einen Arbeitsschritt auszuführen, der aus einer Trennung zwischen einem Permeat und einem konzentrierten Produkt besteht, wobei der Abwasserstrom entlang einer Tangentialfiltrationsrichtung (F) innerhalb des Filtrationselements (12) strömt;
eine Abwassersammelvorrichtung (3), die mittels eines Zuführungsverteilers (8) den zu behandelnden Abwasserstrom dem Tangentialfiltrationselement (12) zuführt;
einen Speisekanal (26), der sich vom Filtrationselement (12) zur Abwassersammelvorrichtung (3) erstreckt, so dass das konzentrierte Produkt innerhalb der Filtrationseinheit (1; 1**), insbesondere in einer kontinuierlichen Weise während jedes Arbeitszyklus, wieder umgewälzt wird; und
eine Sammelvorrichtung (17) für das Permeat, die durch einen Zuführungskanal (18) gespeist wird, der sich vom Tangentialfiltrationselement (12) erstreckt;
und wobei die Filtrationseinheit (1; 1**) für einen diskontinuierlichen oder intermittierenden Betrieb eingerichtet ist, in dem jeder Arbeitszyklus nur in dem Moment unterbrochen wird, in dem die Steuereinheit (CU) eine Permeatmenge erfasst, die gleich einer Referenzmenge (L_{STOP}_₃) innerhalb der Sammelvorrichtung (17) für das Permeat ist.

2. Anlage nach Anspruch 1, wobei die erste Verarbeitungseinheit (47, 33) eine Wascheinheit (47) für Emailliervorrichtungen oder eine Gießmaschine (33) aufweist; und wobei die zweite Verarbeitungseinheit (46, 27) eine Einheit (46) für die Vorbereitung der der Emaillien, die in der Herstellung der Keramikartikel verwendet werden sollen, oder eine Einheit (27) für die Vorbereitung des Schlickers aufweist, der in der Herstellung der Keramikartikel verwendet werden soll.

3. Anlage nach Anspruch 1 oder 2, die eine erste Pumpeinrichtung (9) aufweist, die entlang dem Zuführungsverteiler (8) untergebracht ist.

4. Anlage nach einem der vorhergehenden Ansprüche, wobei die Filtrationseinheit (1; 1**) mehrere parallel angeordnete Tangentialfiltrationselemente (12) aufweist.

5. Anlage nach einem der vorhergehenden Ansprüche, wobei am Ende jedes Arbeitsschritts die Steuereinheit (CU) eingerichtet ist, das innerhalb der Vorrichtung (3) gesammelte konzentrierte Produkt zur zweiten Verarbeitungseinheit (27; 46) zu transportieren, bis eine vorbestimmte Menge (Lₘᵢₙ) des konzentrierten Produkts innerhalb der Vorrichtung (3) erreicht wird.

6. Anlage nach einem der Ansprüche 3 bis 5, die einen Speisekanal (28) für das konzentrierte Produkt aufweist, der sich von der Abwassersammelvorrichtung (3) zur zweiten Verarbeitungseinheit (27; 46) erstreckt;
wobei die zweite Pumpeinrichtung (29) vorzugsweise entlang dem Speisekanal (28) angeordnet ist, um das konzentrierte Produkt zu befördern.

7. Anlage nach einem der vorhergehenden Ansprüche, wobei das Tangentialfiltrationselement (12) einen Haltemantel (13) aufweist, der konfiguriert ist, im Inneren mindestens eine Filtermembran (15) vorzugsweise aus Keramik und/oder einem Polymer aufzunehmen.

8. Anlage nach Anspruch 7, wobei die Filtermembran (15) aus einem monolithischen Element besteht, das im Inneren mehrere Filtrationskanäle (16) für den zu behandelnden Abwasserstrom aufweist, und wobei der zu behandelnde Abwasserstrom dazu bestimmt ist, relativ zur Oberfläche jedes Filtrationskanals (16) tangential zu strömen;
wobei die Filtermembran (15) dazu bestimmt ist, Teilchen mit einer ungefähren Größe von mindestens 0,3 µm, vorteilhafterweise mindestens 0,2 µm zurückzuhalten.

9. Anlage nach einem der vorhergehenden Ansprüche, wobei die Filtrationseinheit (1; 1**) einen Waschkreislauf (11) für die Filtrationsvorrichtung (7) aufweist, der einen ersten Tank (52) aufweist, der vorzugsweise mit Leitungswasser versorgt wird und mit dem Zuführungsverteiler (8) verbunden ist.

10. Anlage nach einem der vorhergehenden Ansprüche, wobei während jedes Arbeitsschritts die Steuereinheit (CU) eingerichtet ist, mit einer programmierbaren Häufigkeit und Dauer Rückspülvorgänge mittels einer dritten Pumpeinrichtung (24) durchzuführen, die aus einem Tank (19) der Sammelvorrichtung (17) für das Permeat ansaugt, um eine Rückspülung des Filtrationselements (12) mit dem Permeat durchzuführen.

11. Anlage nach einem der Ansprüche 1 bis 9, wobei während jedes Arbeitsschritts die Steuereinheit (CU) eingerichtet ist, mit einer programmierbaren Häufigkeit und Dauer Rückspülvorgänge des Filtrationselements (12) mittels eines Pressluft-Rückspülkreislaufs (60) durchzuführen.

12. Verfahren zum Herstellen von Keramikartikeln, das aufweist:
einen ersten Verarbeitungsschritt, während dem ein zu behandelnder Abwasserstrom erzeugt wird;
einen Arbeitsschritt, in dem eine Abwasserstrom-Tangentialfiltration durchgeführt wird, um ein Permeat und ein konzentriertes Produkt zu trennen;
einen Rückgewinnungsschritt, um das Permeat und das konzentrierte Produkt zurückzugewinnen, die aus dem Arbeitsschritt erhalten werden; und
einen Herstellungsschritt, um eine Komponente in der Herstellung der Keramikartikel zu erzeugen, während dem das zurückgewonnene konzentrierte Produkt verwendet wird;
wobei das Verfahren **dadurch gekennzeichnet ist, dass** der Arbeitsschritt in einer diskontinuierlichen Weise stattfindet und unterbrochen wird, wenn eine erzeugte Permeatmenge erfasst wird, die gleich einer Referenzmenge (L_{STOP_3}) ist, und wobei das konzentrierte Produkt während des Arbeitsschritts kontinuierlich wieder umgewälzt wird.

13. Verfahren nach Anspruch 12, das einen zweiten Verarbeitungsschritt und/oder einen Waschschritt aufweist, der mit dem zurückgewonnenen Permeat ausgeführt wird, während dem das zurückgewonnene Permeat verwendet wird.

14. Verfahren nach Anspruch 12 oder 13, wobei der erste Verarbeitungsschritt einen Gießschritt der Keramikartikel und einen Waschschritt der während des Gießschritts verwendeten Gießzellen aufweist.

15. Verfahren nach Anspruch 12 oder 13, wobei der erste Verarbeitungsschritt einen Emaillierschritt, um die Keramikartikel zu emaillieren, und einen Waschschritt aufweist, um die während des Emaillierschritts verwendeten Emailliervorrichtungen zu waschen.

## Revendications

1. Installation (2) pour la production d'articles en céramique comprenant :
au moins une première unité de traitement (33 ; 47), qui est configurée pour produire, pendant le fonctionnement normal, un flux d'eaux usées à traiter ;
au moins une unité de filtration (1 ; 1**) alimentée par le flux d'eaux usées produit par la première unité de traitement (33 ; 47) ;
au moins une seconde unité de traitement (27 ; 46), qui est configurée pour produire, pendant le fonctionnement normal, au moins un composant dans la production des articles en céramique ;
au moins un ensemble de transport (28 ; 28**) pour introduire un produit concentré obtenu à partir de l'unité de filtration (1 ; 1**) dans la seconde unité de traitement (27 ; 46) ;
au moins une unité de récupération (22) pour récupérer le perméat obtenu à partir de l'unité de filtration (1) ; et
une unité de commande (CU) ;
l'installation est **caractérisée en ce que** l'unité de filtration (1 ; 1**) comprend :
au moins un élément de filtration tangentielle (12) du flux d'eaux usées conçu pour effectuer une étape de travail, qui est une séparation entre un perméat et un produit concentré ; le flux d'eaux usées s'écoule le long d'une direction de filtration tangentielle (F) à l'intérieur de l'élément de filtration (12) ;
un dispositif de collecte d'eaux usées (3) qui introduit, au moyen d'un distributeur (8), le flux d'eaux usées à traiter dans l'élément de filtration tangentielle (12) ;
un conduit d'alimentation (26) s'étendant à partir de l'élément de filtration (12) jusqu'au dispositif de collecte d'eaux usées (3) de telle sorte que le produit concentré est remis en circulation à l'intérieur de l'unité de filtration (1 ; 1**), en particulier de manière continue pendant chaque cycle de travail ; et
un dispositif de collecte (17) pour le perméat, qui est fourni par l'intermédiaire d'un conduit de distribution (18) s'étendant à partir de l'élément de filtration tangentiel (12) ;
et dans laquelle l'unité de filtration (1 ; 1**) est agencée pour un fonctionnement discontinu ou intermittent, dans lequel chaque cycle de travail n'est interrompu qu'au moment où l'unité de commande (CU) détecte une quantité de perméat, qui est égale à une quantité de référence (L_{STOP}_₃) à l'intérieur du dispositif de collecte (17) pour le perméat.

2. Installation selon la revendication 1, dans laquelle la première unité de traitement (47, 33) comprend une unité de lavage (47) pour des appareils d'émaillage ou une machine de coulée (33) ; et dans laquelle la seconde unité de traitement (46, 27) comprend une unité (46) pour la préparation des émaux à utiliser dans la production des articles en céramique ou une unité (27) pour la préparation de la barbotine à utiliser dans la fabrication des articles en céramique.

3. Installation selon la revendication 1 ou 2 et comprenant des premiers moyens de pompage (9) logés le long du distributeur (8).

4. Installation selon l'une quelconque des revendications précédentes, dans laquelle l'unité de filtration (1 ; 1**) comprend une pluralité d'éléments de filtration tangentielle (12) agencés en parallèle.

5. Installation selon l'une quelconque des revendications précédentes, dans laquelle à la fin de chaque étape de travail, l'unité de commande (CU) est agencée pour transférer le produit concentré collecté à l'intérieur dudit dispositif (3) vers la seconde unité de traitement (27 ; 46) jusqu'à atteindre une quantité prédéterminée (Lₘᵢₙ) de produit concentré à l'intérieur dudit dispositif (3).

6. Installation selon l'une quelconque des revendications 3 à 5, et comprenant un conduit d'alimentation en produit concentré (28) s'étendant à partir du dispositif de collecte d'eaux usées (3) jusqu'à la seconde unité de traitement (27 ; 46) ; des deuxièmes moyens de pompage (29) sont de préférence agencés le long du conduit d'alimentation (28) pour acheminer le produit concentré.

7. Installation selon l'une quelconque des revendications précédentes, dans laquelle l'élément filtrant tangentiel (12) comprend une coque de support (13) configurée pour loger intérieurement au moins une membrane filtrante (15), de préférence en céramique et/ou en polymère.

8. Installation selon la revendication 7, dans laquelle la membrane filtrante (15) consiste en un élément monolithique comportant intérieurement une pluralité de canaux de filtration (16) pour le flux d'eaux usées à traiter et où le flux d'eaux usées à traiter est conçu pour s'écouler tangentiellement par rapport à la surface de chaque canal de filtration (16) ; la membrane filtrante (15) est conçue pour retenir les particules ayant une taille approximative d'au moins 0,3 µm, de manière avantageuse d'au moins 0,2 µm.

9. Installation selon l'une quelconque des revendications précédentes, dans laquelle l'unité de filtration (1 ; 1**) comprend un circuit de lavage (11) pour le dispositif de filtration (7) comprenant un premier réservoir (52), de préférence alimenté en eau de ville, et raccordé au distributeur (8).

10. Installation selon l'une quelconque des revendications précédentes, dans laquelle pendant chaque étape de travail, l'unité de commande (CU) est agencée pour effectuer, avec une fréquence et une durée programmables, des opérations de lavage à contre-courant au moyen de troisièmes moyens de pompage (24) qui puisent dans un réservoir (19) du dispositif de collecte (17) pour le perméat pour effectuer un lavage à contre-courant de l'élément de filtration (12) avec le perméat.

11. Installation selon l'une quelconque des revendications 1 à 9, dans laquelle pendant chaque étape de travail, l'unité de commande (CU) est agencée pour effectuer, avec une fréquence et une durée programmables, des opérations de lavage à contre-courant de l'élément de filtration (12) au moyen d'un circuit de lavage à contre-courant à air comprimé (60).

12. Méthode de production d'articles en céramique comprenant :
une première étape de traitement, au cours de laquelle un flux d'eaux usées à traiter est produit ;
une étape de travail dans laquelle une filtration tangentielle de flux d'eaux usées est effectuée, de manière à séparer un perméat et un produit concentré ;
une étape de récupération pour récupérer le perméat et le produit concentré obtenus à partir de l'étape de travail ; et
une étape de production pour produire un composant dans la fabrication des articles en céramique, au cours de laquelle le produit concentré récupéré est utilisé ;
la méthode est **caractérisée en ce que** l'étape de travail se déroule de manière discontinue et est interrompue quand une quantité de perméat produite, égale à une quantité de référence (L_{STOP_3}), est détectée et dans laquelle le produit concentré est remis en circulation de manière continue pendant ladite étape de travail.

13. Méthode selon la revendication 12 et comprenant une seconde étape de traitement et/ou une étape de lavage réalisées avec le perméat récupéré, au cours desquelles le perméat récupéré est utilisé.

14. Méthode selon la revendication 12 ou 13, dans laquelle la première étape de traitement comprend une étape de coulée des articles en céramique et une étape de lavage des cellules de coulée utilisées pendant l'étape de coulée.

15. Méthode selon la revendication 12 ou 13, dans laquelle la première étape de traitement comprend une étape d'émaillage pour émailler les articles en céramique et une étape de lavage pour laver les appareils d'émaillage utilisés pendant l'étape d'émaillage.
